# EUROPÄISCHE PATENTANMELDUNG

(11) **EP 1 741 585 A1**
(43) Veröffentlichungstag der Anmeldung: **10.01.2007**
(21) Anmeldenummer: 06013709.8
(22) Anmeldetag: 03.07.2006
(51) Int. Cl.: B60H 1/00

(54) **Heizungs und/oder -Klimaanlage**

(30) Priorität: 05.07.2005 DE 102005031684
(71) Anmelder: Behr GmbH & Co. KG, 70469 Stuttgart (DE)
(72) Erfinder: Klinger, Dietrich, Dipl-Ing., 73540 Heubach (DE); Voigt, Klaus, Dipl.-Ing. (FH), 74321 Bietigheim-Bissingen (DE)

(57) **Zusammenfassung**

Die Erfindung betrifft eine Heizungs- und/oder Klimaanlage für ein Kraftfahrzeug (1) mit einem Luftführungsgehäuse (5), mindestens einer Mischklappe (6) und einer Mehrzahl von Luftkanälen, die vom Mischraum (7) abzweigen und zu Düsen (8', 9', 10', 11') führen, mit die Luftströme in denselben regelnden Klappen, wobei an mindestens einem der Luftkanäle die den entsprechenden Luftstrom regelnde Klappe im Bereich der Düse (8', 9', 10', 11') angeordnet oder in die Düse (8', 9', 10', 11') integriert ausgebildet ist.

## Beschreibung

Die Erfindung betrifft eine Heizungs- und/oder Klimaanlage für ein Kraftfahrzeug gemäß dem Oberbegriff des Anspruchs 1.

Herkömmlicherweise wird in Luftführungsgehäusen von Kraftfahrzeug-Klimaanlagen oder Kraftfahrzeughaizanlagen eine Mehrzahl von Klappen verwendet, welche die Luft mittels Mischung zweier Luftströme mit unterschiedlicher Temperatur auf die gewünschte Temperatur temperieren (Mischklappe), und die Verteilung derselben auf unterschiedliche Luftkanäle (Verteilerklappen), nämlich dem Defrost-Luftkanal, dem Belüftungs-Luftkanal und dem Fußraum-Luftkanal, an deren Ende Düsen vorgesehen sind, steuert. Dabei sind die Verteilerklappen üblicherweise im Bereich des Mischraums am Anfang der einzelnen Luftkanäle vorgesehen. Dabei kann ggf. auch eine Klappe für zwei Luftkanäle vorgesehen sein, wenn ein direkter Zusammenhang der Regelungsabläufe der durch die Luftkanäle zu den am Ende derselben angeordneten Düsen gegeben ist.

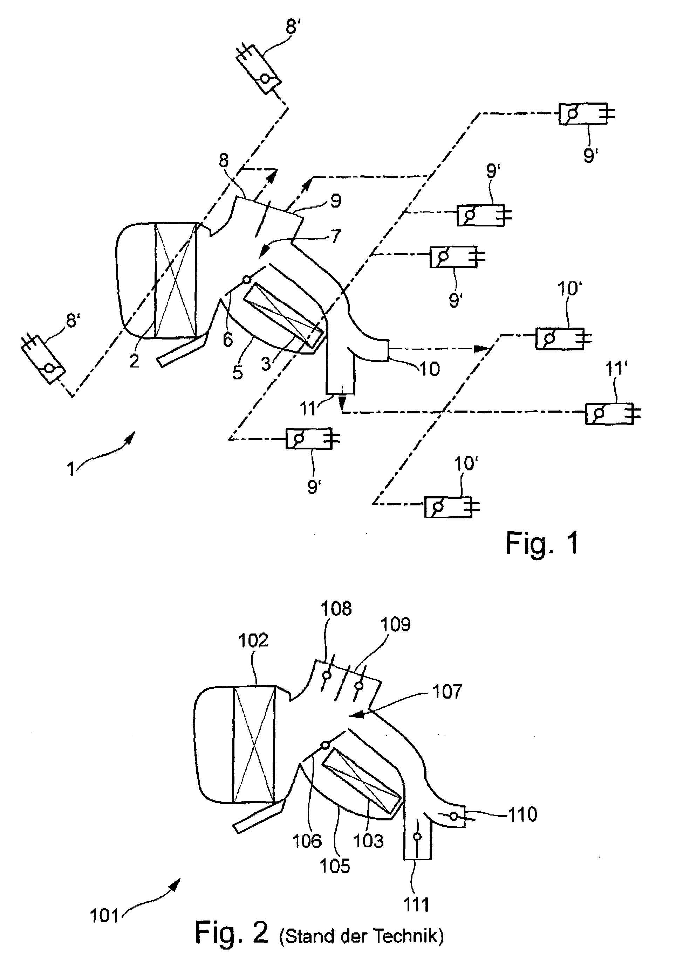

Ein Beispiel einer bekannten Klimaanlage ist in Fig. 2 dargestellt. Eine Kraftfahrzeug-Klimaanlage 101 weist einen Verdampfer 102 und einen Heizer 103 auf, die in einem Luftführungsgehäuse 105 angeordnet sind. Die Temperierung der Luft erfolgt mit Hilfe einer Mischklappe 106, welche den vom Verdampfer 102 kommenden Luftstrom am Heizer 103 vorbei und/oder durch denselben leiten. Die teilweise Vermischung der unterschiedlich temperierten Luftströme erfolgt - entsprechend der unter Bezugnahme auf Fig. 2 beschriebenen bekannten Klimaanlage - im nachfolgenden Mischraum 107.

Vom Mischraum 107 zweigen verschiedene Luftkanäle ab, wobei am Defrostauslass 108 eine Defrostklappe, am Belüftungsauslass 109 eine Belüftungsklappe, am Fußraumauslass 110 eine Fußraumklappe und am Fondraum-Belüftungsauslass 111 eine Fondraum-Belüftungsklappe vorgesehen ist.

Eine derartige Heizungs- und/oder Klimaanlage lässt noch Wünsche offen, insbesondere in Hinblick auf Mehrzonen-Klimaanlagen.

Es ist Aufgabe der Erfindung, eine verbesserte Heizungs- und/oder Klimaanlage für ein Kraftfahrzeug zur Verfügung zu stellen.

Diese Aufgabe wird gelöst durch eine Heizungs- und/oder Klimaanlage für ein Kraftfahrzeug mit den Merkmalen des Anspruchs 1. Vorteilhafte Ausgestaltungen sind Gegenstand der Unteransprüche.

Erfindungsgemäß ist eine Heizungs- und/oder Klimaanlage für ein Kraftfahrzeug vorgesehen, mit einem Luftführungsgehäuse, mindestens einer Mischklappe und einer Mehrzahl von Luftkanälen, die vom Mischraum abzweigen und zu Düsen führen, mit die Luftströme in denselben regelnden Klappen, wobei an mindestens einem der Luftkanäle die den entsprechenden Luftstrom regelnde Klappe im Bereich der Düse angeordnet oder in die Düse integriert ausgebildet ist. Dabei ist an mindestens einem Luftkanaleintritt im Bereich oder in der Nähe des Mischraums keine Klappe vorgesehen. Vielmehr ist die Klappe im Bereich der Düse, also im Bereich des Luftaustritts aus dem Luftkanal, angeordnet, wobei. die Klappe direkt in die Düse integriert sein kann. Durch die Verlagerung der Klappe in den Bereich der Düse wird im Bereich des Luftführungsgehäuses Raum gewonnen, was insbesondere angesichts der häufig auftretenden Bauraumprobleme bei mehrzonigen Heizungs- und/oder Klimaanlagen für ein Kraftfahrzeug eine Vereinfachung der Konstruktion und der Montage ermöglicht. Ferner bringt die individuelle Einstellbarkeit über Aktoren im Bereich der Düsen Komfortverbesserungen mit sich.

Bevorzugt sind im Luftführungsgehäuse der Heizungs- und/oder Klimaanlage zumindest ein Verdampfer und/oder ein Heizer angeordnet.

Im Luftführungsgehäuse, in welchem der Verdampfer und/oder der Heizer angeordnet sind, sind als einzige Klappe(n) vorzugsweise ausschließlich eine oder mehrere den Luftstrom durch den Verdampfer und/oder Heizer oder an denselben vorbeileitende Mischklappen angeordnet, d.h. alle Verteilerklappen sind in das Luftkanalsystem, insbesondere im Bereich der Luftkanalenden, und weg vom Luftführungsgehäuse der Klimaanlage verlagert.

Die Klappe ist vorzugsweise direkt in die Düseneinheit integriert ausgebildet, wobei der Klappenbereich in Strömungsrichtung der Luft vor dem Bereich der Düse angeordnet ist, in welchem der austretende Luftstrahl gerichtet, d.h. nach oben, unten, rechts oder links abgelenkt, als Spotstrahl gebündelt oder verwirbelt wird. Hierbei kann die Klappe durchaus auch zur zusätzlichen Verwirbelung für die Diffusstellung dienen, so dass die Düse gegebenenfalls auch einfacher ausgebildet sein kann, um den gleichen Komfort zu erzielen.

Vorzugsweise weist die Klappe eine mittig angeordnete Schwenkachse auf, die quer durch den Luftkanal verläuft. Derartige Klappen benötigen relativ geringe Verstellkräfte, so dass der Aktor klein dimensioniert sein kann, wodurch Kosten eingespart werden können.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer Kraftfahrzeug-Klimaanlage gemäß dem Ausführungsbeispiel, und
- Fig. 2: eine schematische Darstellung einer Kraftfahrzeug-Klimaanlage gemäß dem Stand der Technik.

Eine Kraftfahrzeug-Klimaanlage 1 weist einen Verdampfer 2 und einen Heizer 3 auf, die in einem Luftführungsgehäuse 5 angeordnet sind. Die Temperierung der Luft erfolgt mit Hilfe einer Mischklappe 6, welche den vom Verdampfer 2 kommenden Luftstrom auf an sich bekannte Weise am Heizer 3 vorbei und/oder durch denselben leiten. Die teilweise Vermischung der unterschiedlich temperierten Luftströme erfolgt - entsprechend der unter Bezugnahme auf Fig. 2 beschriebenen bekannten Klimaanlage - im nachfolgenden Mischraum 7.

Vom Mischraum 7 zweigen verschiedene Luftkanäle ab, wobei gemäß dem vorliegenden Ausführungsbeispiel am Defrostauslass zum Defrost-Luftkanal, am Belüftungsauslass zum Belüftungs-Luftkanal für den Frontbereich, am Fußraumauslass zum Fußraum-Luftkanal und am Fondraum-Belüftungsauslass für den Fondraum-Belüftungs-Luftkanal keine Klappen vorgesehen sind. Die Regelung der Luftströme, die durch die einzelnen Düsen in den Fahrzeuginnenraum austreten, erfolgt durch Klappen, nämlich zwei Defrostklappen, vier Belüftungsklappen für den Frontbereich, zwei Fußraumklappen für den Frontbereich und eine Fondraum-Belüftungsklappe, die direkt in die Düsen am Austritt in den Fahrzeuginnenraum integriert ausgebildet sind.

Vorliegend sind hierfür, wie in Fig. 1 schematisch angedeutet, jeweils um 90° um eine zentrale Schwenkachse verschwenkbare Klappen vorgesehen, die in Luftströmungsrichtung gesehen vor dem Luftaustritt der Düsen angeordnet sind, wobei die Düsen einen Grill oder andere die Strömungsrichtung der ausströmenden Luft beeinflussende Vorrichtung aufweisen können, welche beispielsweise durch verschwenkbare Lamellen gebildet ist und die Strömungsrichtung (oben/unten, rechts/links) sowie ggf. eine Spotstellung und eine Diffusstellung ermöglicht.

## Patentansprüche

1. Heizungs- und/oder Klimaanlage für ein Kraftfahrzeug mit einem Luftführungsgehäuse (5), mindestens einer Mischklappe (6) und einer Mehrzahl von Luftkanälen, die von einem Mischraum (7) abzweigen und zu Düsen (8', 9', 10', 11') führen, mit die Luftströme in denselben regelnden Klappen, **dadurch gekennzeichnet, dass** an mindestens einem der Luftkanäle die den entsprechenden Luftstrom regelnde Klappe im Bereich der Düse (8', 9', 10', 11') angeordnet oder in die Düse (8', 9', 10', 11') integriert ausgebildet ist.

2. Heizungs- und/oder Klimaanlage nach Anspruch 1, **dadurch gekennzeichnet, dass** die Klappe in die Düseneinheit integriert ausgebildet ist, wobei der Klappenbereich in Strömungsrichtung der Luft vor dem Bereich der Düse angeordnet ist, in welchem der austretende Luftstrahl gerichtet oder verwirbelt wird.

3. Heizungs- und/oder Klimaanlage nach Anspruch 1 oder 2, **dadurch gekennzeichnet, dass** die Klappe eine mittig angeordnete Schwenkachse aufweist, die quer durch den Luftkanal verläuft.

4. Heizungs- und/oder Klimaanlage nach einem der vorhergehenden Ansprüche, **dadurch gekennzeichnet, dass** der Schwenkwinkel der Klappe 90° beträgt.

5. Heizungs- und/oder Klimaanlage nach einem der vorhergehenden Ansprüche, **dadurch gekennzeichnet, dass** im Luftführungsgehäuse (5), zumindest ein Verdampfer (2) und/oder ein Heizer (3) angeordnet sind.

6. Heizungs- und/oder Klimaanlage nach einem der vorhergehenden Ansprüche, **dadurch gekennzeichnet, dass** im Luftführungsgehäuse (5), in welchem der Verdampfer (2) und/oder der Heizer (3) angeordnet sind, als Klappe ausschließlich eine oder mehrere den Luftstrom durch den Verdampfer (2) und/oder Heizer (3) oder an denselben vorbeileitende Mischklappen (6) angeordnet sind.

7. Heizungs- und/oder Klimaanlage nach einem der vorhergehenden Ansprüche, **dadurch gekennzeichnet, dass** ein Aktor für die Klappe im Bereich der entsprechenden Düse angeordnet ist.

8. Heizungs- und/oder Klimaanlage nach einem der vorhergehenden Ansprüche, **dadurch gekennzeichnet, dass** die im Bereich der Düse angeordnete oder in dieselbe integrierte Klappe die Defrostklappe und/oder die Belüftungsklappe und/oder die Fußraumklappe ist.
